# EUROPÄISCHE PATENTSCHRIFT

(11) **EP 4 141 493 B1**
(45) Veröffentlichungstag und Bekanntmachung des Hinweises auf die Patenterteilung: **07.06.2023**
(21) Anmeldenummer: 21192989.8
(22) Anmeldetag: 25.08.2021
(51) Int. Cl.: G01V 8/14

(54) **OPTISCHER SENSOR**
OPTICAL SENSOR
CAPTEUR OPTIQUE

(43) Veröffentlichungstag der Anmeldung: 01.03.2023
(73) Patentinhaber: Leuze electronic GmbH + Co. KG, 73277 Owen/Teck (DE)
(72) Erfinder: Butzbach, Dr., Markus, 65197 Wiesbaden (DE); Wendel, Dr. Simon, 73230 Kirchheim unter Teck (DE); Aldiek, Norbert, 73230 Kirchheim/Teck (DE)
(74) Vertreter: Ruckh, Rainer Gerhard

(56) Entgegenhaltungen:
- EP-A2- 2 226 654
- EP-B1- 3 078 984
- DE-B4-102005 059 363
- DE-C5-102005 033 349

## Beschreibung

Die Erfindung betrifft einen optischen Sensor gemäß dem Oberbegriff des Anspruchs 1.

Derartige optische Sensoren können generell als Lichttaster, Lichtschranken, Reflexionslichtschranken oder Distanzsensoren ausgebildet sein. Mit derartigen optischen Sensoren erfolgt eine Detektion von Objekten in einem Überwachungsbereich. Hierzu weist der optische Sensor einen Sendelichtstrahlen emittierenden Sender, einen Empfangslichtstrahlen empfangenden Empfänger und eine Auswerteeinheit auf, in welcher in Abhängigkeit der am Ausgang des Empfängers anstehenden Empfangssignale ein Objektfeststellungssignal generiert wird.

Um eine hohe Nachweisempfindlichkeit des optischen Sensors zu erreichen, ist es notwendig, dass ein möglichst großer Anteil der Empfangslichtstrahlen auf den Empfänger trifft. Die Erfüllung dieser Anforderung ist insbesondere dann problematisch, wenn kleine Objekte, beispielsweise Reflektoren, detektiert werden müssen, von welchen nur ein Teil der Sendelichtstrahlen zurück zum Empfänger reflektiert wird.

Um zur Erhöhung der Nachweisempfindlichkeit eine möglichst große Bestrahlungsstärke auf dem Objekt zu erzeugen, ist es üblich und vorteilhaft, die lichtemittierende Fläche des Senders in den Überwachungsraum abzubilden. Dies kann allerdings zu Problemen führen, wenn der Sender keine homogene lichtemittierende Fläche aufweist.

Beispiele hierfür sind als Sendedioden ausgebildete Sender, die im Zentrum ihrer lichtemittierenden Fläche ein Bondpad zum Anschluss eines Bonddrahts aufweisen. Aufgrund dessen ist für den Lichtfleck der Sendelichtstrahlen im Abbildungsort keine homogene Bestrahlungsstärke gegeben. Vielmehr weist der Lichtfleck der Sendelichtstrahlen im Zentrum eine erheblich reduzierte Bestrahlungsstärke auf.

Diese Strahlcharakteristik erschwert in unerwünschter Weise eine stabile Obj ektfeststellung.

Ein typisches Beispiel hierfür sind als Reflexionslichtschranken ausgebildete optische Sensoren. Bei derartigen Reflexionslichtschranken ist am Rand des Überwachungsbereichs ein Reflektor angeordnet. Über diesen Reflektor werden bei freiem Überwachungsbereich vom Sender emittierte Sendelichtstrahlen als Empfangslichtstrahlen zum Empfänger zurückreflektiert. Je nach Applikation können die Größe des Reflektors und/oder dessen Abstand zum optischen Sensor so gewählt sein, dass die Sendelichtstrahlen bei freiem Strahlengang nicht vollständig auf den Reflektor treffen. In diesen Fällen führt das Minimum der Bestrahlungsstärke im Zentrum des Lichtflecks der Sendelichtstrahlen aufgrund des Bondpads im Zentrum des als Sendediode ausgebildeten Senders zu einer signifikant reduzierten Lichtmenge am Empfänger und damit zu einer Beeinträchtigung der Nachweisempfindlichkeit des optischen Sensors.

Um diesen Effekt zu kompensieren, kann der Sender außerhalb des Brennpunkts der dem Sender nachgeordneten Sendeoptik angeordnet werden. Durch eine derartige Defokussierung wird eine unscharfe Abbildung der Sendelichtstrahlen erzeugt, was dazu führt, dass das Minimum der Bestrahlungsfläche des Lichtflecks weniger ausgeprägt ist. Das heißt, es wird eine homogene Verteilung der Bestrahlungsfläche über den Querschnitt der Sendelichtstrahlen erzeugt.

Nachteilig bei einer derartigen Defokussierung ist jedoch, dass diese auch eine Aufweitung des Strahlkegels der Sendelichtstrahlen, das heißt eine Vergrößerung des Lichtflecks und eine Reduzierung der Bestrahlungsstärke des Lichtflecks verursacht, was zu einer geringeren Nachweisempfindlichkeit des optischen Sensors führt.

Aus der DE 10 2005 059 363 B4 ist ein optischer Sensor bekannt, der zur Erfassung von Objekten in einem Überwachungsbereich dient. Dieser optische Sensor umfasst einen Sendelichtstrahlen emittierenden Sender, eine dem Sender nachgeordnete Sendeoptik zur Strahlformung der Sendelichtstrahlen, einen Empfangslichtstrahlen empfangenden Empfänger und eine Auswerteeinheit zur Generierung eines Objektfeststellungssignals in Abhängigkeit der Empfangssignale am Ausgang des Empfängers. Mittels der Sendeoptik werden Inhomogenitäten der Bestrahlungsstärke des Lichtflecks der Sendelichtstrahlen reduziert, indem die Sendeoptik in Form einer Linse ausgebildet ist, die an ihrer Lichteintrittsfläche oder Lichtaustrittsfläche eine Facettenstruktur bestehend aus von gegenüberliegenden Randsegmenten der Linse in Neigungswinkeln zum Zentrum der Linse zulaufenden Facetten aufweist.

Mit den Facettenstrukturen in der die Sendeoptik bildenden Linse wird gezielt eine Überlagerung mehrerer gegeneinander verschobener Abbildungen der Lichtquelle und damit auch der räumlichen Verteilung der Bestrahlungsstärke des Lichtflecks bewirkt, ohne dass hierbei der Lichtfleck der Sendelichtstrahlen nennenswert aufgeweitet wird, was zu einer unerwünschten Reduzierung der Bestrahlungsstärke im Zentrum des Lichtflecks führen würde. Mittels der Facettenstruktur können somit Inhomogenitäten der Bestrahlungsstärke im Sendelichtfleck des Sensors reduziert werden.

Je nach Gestalt der Lichtquelle können die Inhomogenitäten im Lichtfleck durch eine endliche Anzahl an Facetten allerdings nicht vollständig kompensiert werden, eine Restinhomogenität bleibt bestehen.

Die EP 2 226 654 A2 betrifft einen optischen Sensor zur Erfassung von Objekten in einem Überwachungsbereich, mit einem Sendelichtstrahlen ermittierenden Sender, einem Empfangslichtstrahlen empfangenden Empfänger, einer Auswerteeinheit, in welcher in Abhängigkeit der Empfangssignale am Ausgang des Empfängers ein Objektfeststellungssignal generiert wird, und mit eine dem Sender nachgeordneten Sendeoptik zur Strahlformung der Sendelichtstrahlen. Die Sendeoptik schließt unmittelbar an den Sender an und weist einen Konzentrator auf, der ein Lichtführungselement für die Sendelichtstrahlen bildet. Hierzu erfolgt an der Mantelfläche des Konzentrators eine Totalreflexion der Sendelichtstrahlen. Dabei ist die dem Sender zugeordnete Stirnseite des Konzentrates als Einkoppelfläche für die Sendelichtstrahlen ausgebildet. An der dem Sender abgewandten Stirnseite des Konzentrators ist eine Austrittsfläche vorgesehen, welche ein Strahlformungsmittel für die Sendelichtstrahlen bildet. Die Einkoppelfläche begrenzt einen trichterförmigen Hohlraum, der an der Stirnseite des Konzentrators ausmündet.

Die DE 10 2005 033 349 C5 betrifft einen optischen Sensor zur Erfassung von Objekten in einem durch einen als Retroreflektor ausgebildeten Reflektor begrenzten Überwachungsbereich mit wenigstens einem Sendelichtstrahlen emittierenden Sender, wobei die Sendelichtstrahlen bei freiem Überwachungsbereich auf den Reflektor geführt sind, mit zwei Empfangslichtstrahlen empfangenden Empfängern, wobei ein erster Empfänger in einer sendernahen Zone in einem geringeren Abstand zum Sender als der in einer senderfernen Zone zum Sender liegende zweite Empfänger angeordnet ist, und mit einer Auswerteeinheit zur Generierung eines binären Schaltsignals, dessen Schaltzustände angeben, ob sich ein Objekt im Überwachungsbereich befindet oder nicht. Die Empfangssignale der Empfänger werden jeweils mit einem einstellbaren Verstärkungsfaktor so verstärkt, dass bei Detektion des Reflektors die verstärkten Empfangssignale U_{E1} des Empfängers in der sendernahen Zone größer sind als die verstärkten Empfangssignale U_{E2} des Empfängers in der senderfernen Zone. Das Schaltsignal nimmt den Schaltzustand "Objekt erkannt" ein, wenn entweder U_{E2} > U_{E1} ist oder wenn die Bedingung U_{E1} + U_{E2} < Uₘᵢₙ erfüllt ist, wobei Uₘᵢₙ ein ein vorgegebener Schwellwert ist. Ansonsten nimmt das Schaltsignal den Schaltzustand freier "Überwachungsbereich" ein.

Der Erfindung liegt die Aufgabe zugrunde, einen optischen Sensor der eingangs genannten Art bereitzustellen, welcher eine verbesserte Funktionalität und Nachweissicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich, mit einem Sendelichtstrahlen emittierenden Sender, einer dem Sender nachgeordneten Sendeoptik zur Strahlformung der Sendelichtstrahlen, einem Empfangslichtstrahlen empfangenden Empfänger und einer Auswerteeinheit zur Generierung eines Objektfeststellungssignals in Abhängigkeit der Empfangssignale am Ausgang des Empfängers. Wenigstens eine Grenzfläche der Sendeoptik weist eine kontinuierliche Keilform, ohne abrupte Übergänge wie Kanten oder Absätze, auf.

Die kontinuierliche Keilform ist dabei als Weiterentwicklung der Facettenstruktur zu verstehen, wie sie in der DE 10 2005 059 363 B4 beschrieben wird. Statt separater Facetten, die an den gemeinsamen Stoßkanten unstetige Übergänge zeigen, weist die erfindungsgemäße kontinuierliche Keilform in höchstens einem Punkt eine Unstetigkeit auf, an allen anderen Stellen ist die Fläche kontinuierlich gekrümmt.

Durch die erfindungsgemäße Ausbildung der Sendeoptik derart, dass diese eine Grenzfläche mit einer kontinuierlichen Keilform aufweist, wird eine Optimierung des Lichtflecks der Sendelichtstrahlen derart erreicht, dass Inhomogenitäten der Bestrahlungsstärke des vom Sender abgestrahlten Lichts kompensiert werden, sodass durch die Strahlformung der Sendeoptik ein Lichtfleck mit weitgehend homogener Bestrahlungsstärke erhalten wird, ohne dass der Lichtfleck durch die Sendeoptik nennenswert aufgeweitet wird.

Ein wesentlicher Aspekt der Erfindung besteht dabei darin, dass die Grenzfläche eine kontinuierliche Krümmung aufweist, das heißt abrupte Übergänge wie Kanten oder Absätze, wie sie bei der Facettenstruktur der in DE 10 2005 059 363 B4 beschriebenen Sendeoptik vorhanden sind, werden vermieden. Ein Sendelichtfleck, der durch eine Linse mit n Facetten erzeugt wird, kann als Überlagerung von n Einzelbildern interpretiert werden. Inhomogenitäten können dadurch deutlich reduziert, im Allgemeinen aber nicht vollständig eliminiert werden. Durch den Übergang zur kontinuierlichen Keilform werden der Sendelichtfleck verwischt und die Inhomogenitäten können vollständig eliminiert werden.

Weiterhin können Kanten, Absätze oder sonstige diskontinuierliche Strukturen in der Sendeoptik zusätzlich zu Inhomogenitäten in der Bestrahlungsstärke des Lichtflecks der Sendelichtstrahlen nach Durchgang durch die Sendeoptik führen. Dieser Effekt wird mit der erfindungsgemäßen Sendeoptik systematisch vermieden, wodurch Inhomogenitäten der Bestrahlungsstärke des Lichtflecks weiter reduziert werden.

Mit der erfindungsgemäßen Sendeoptik kann insbesondere ein Minimum der Bestrahlungsstärke im Zentrum des Lichtflecks der Sendelichtstrahlen, welches durch ein Bondpad auf der lichtemittierenden Fläche einer den Sender des optischen Sensor bildenden Sendediode bedingt ist, eliminiert werden.

Vorteilhaft ist die keilförmige Grenzfläche rotationssymmetrisch ausgebildet.

Damit ergibt sich über den gesamten Winkelbereich eines konzentrischen Abschnitts der Sendeoptik eine gleichförmige Strahlformung und damit eine gleichförmige Homogenisierung des Lichtflecks der Sendelichtstrahlen.

Besonders vorteilhaft ist die keilförmige Grenzfläche kegelförmig ausgebildet.

Die so ausgebildete Sendeoptik eignet sich besonders gut zur Eliminierung von Inhomogenitäten der Bestrahlungsstärke des Lichtflecks der Sendelichtstrahlen, insbesondere für den Fall, dass der Lichtfleck der vom Sender emittierten Sendelichtstrahlen im Zentrum ein Minimum aufweist, das insbesondere durch ein Bondpad auf der lichtemittierenden Fläche einer den Sender bildenden Sendediode bewirkt ist.

Gemäß einer vorteilhaften Ausgestaltung ist die keilförmige Grenzfläche einer bereits gekrümmten Fläche aufgeprägt.

Insbesondere ist die bereits gekrümmte Fläche asphärisch gekrümmt.

Die insbesondere asphärische Krümmung kann rechnerisch vorgegeben werden, wobei durch eine optimierte Wahl von Koeffizienten bei der Berechnung der Krümmung eine optimierte Anpassung an die Strahlcharakteristik der vom Sender emittierten Sendelichtstrahlen erfolgen kann. Die Keilform kann dabei in die Berechnung der Krümmung mit einbezogen werden, sodass eine an die Strahlcharakteristik der Sendelichtstrahlen des Senders optimierte Keilform der Grenzfläche erhalten wird.

Gemäß einer ersten vorteilhaften Ausgestaltung weist die Sendeoptik nur ein dem Sender zugeordnetes Optikelement auf, wobei dessen Lichteintrittsfläche oder Lichtaustrittsfläche die Grenzfläche ausbildet.

Insbesondere ist das Optikelement eine Linse.

Die Sendeoptik weist damit einen sehr einfachen, kompakten Aufbau auf.

Dabei kann die Linse eine plankonvexe Grundform aufweisen, die durch die keilförmige Grenzfläche modifiziert ist.

Gemäß einer alternativen Ausgestaltung weist die Sendeoptik ein dem Sender zugeordnetes Optikelement und eine dem Optikelement vorgeordnete Abdeckscheibe auf, wobei die Abdeckscheibe die Grenzfläche mit der Keilform aufweist.

Die Abdeckscheibe kann Bestandteil eines Austrittsfensters des optischen Sensors sein oder dieses Austrittsfenster ausbilden. In diesem Fall weist nun die Abdeckscheibe, das heißt das Austrittsfenster eine strahlformende Wirkung auf, mit der Inhomogenitäten im Strahlquerschnitt der Sendelichtstrahlen reduziert werden.

Dabei kann die Lichteintrittsfläche oder Lichtaustrittsfläche der Abdeckscheibe die Grenzfläche ausbilden.

Diese Variante hat den Vorteil, dass als Optikelemente herkömmliche Linsen, insbesondere plankonvexe Linsen eingesetzt werden können.

Die erfindungsgemäße Sendeoptik kann in optischen Sensoren unterschiedlicher Art, insbesondere in Lichttastern, Lichtschranken, Reflexionslichtschranken und Distanzsensoren eingesetzt werden.

Die Erfindung wird im Nachstehenden anhand der Zeichnungen erläutert. Es zeigen:
- Figur 1:: Schematische Darstellung eines als Reflexionslichtschranke ausgebildeten optischen Sensors.
- Figur 2:: Sender in Form einer Sendediode für den optischen Sensor gemäß Figur 1.
- Figur 3:: Erstes Ausführungsbeispiel der erfindungsgemäßen Sendeoptik.
- Figur 4:: Zweites Ausführungsbeispiel der erfindungsgemäßen Sendeoptik.
- Figur 5:: Drittes Ausführungsbeispiel der erfindungsgemäßen Sendeoptik.
- Figur 6:: Ortsabhängigkeit des Lichtflecks der vom Sender emittierten Sendelichtstrahlen bei der Abbildung einer Sendediode gemäß Figur 2.
- Figur 7:: Ortsabhängigkeit des Lichtflecks der Sendelichtstrahlen nach Durchgang durch die erfindungsgemäße Sendeoptik.

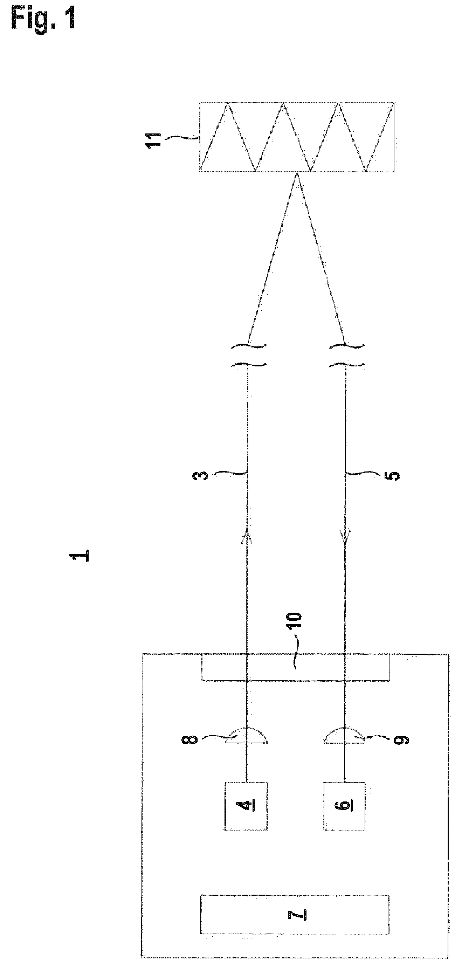

Figur 1 zeigt schematisch einen optischen Sensor 1 zur Erfassung von Objekten in einem Überwachungsbereich. Der optische Sensor 1 ist im vorliegenden Fall als Reflexionslichtschranke ausgebildet. Der optische Sensor 1 ist in einem Gehäuse 2 integriert und weist einen Sendelichtstrahlen 3 emittierenden Sender 4 sowie einen Empfangslichtstrahlen 5 empfangenden Empfänger 6 auf. Der Sender 4 und der Empfänger 6 sind an eine gemeinsame Auswerteeinheit 7 angeschlossen. Die Auswerteeinheit 7, die von einem Mikroprozessor oder dergleichen gebildet ist, dient einerseits zur Ansteuerung des Senders 4. Weiterhin dient die Auswerteeinheit 7 zur Auswertung der Empfangssignale des Empfängers 6, der im vorliegenden Fall von einer Photodiode gebildet ist.

Dem Sender 4 ist zur Strahlformung der Sendelichtstrahlen 3 eine Sendeoptik 8 nachgeordnet. Dem Empfänger 6 ist eine Empfangsoptik 9 vorgeordnet. Mittels dieser erfolgt eine Fokussierung der Empfangslichtstrahlen 5 auf den Empfänger 6. In der dem Überwachungsbereich zugewandten Frontseite des Gehäuses 2 befindet sich ein Austrittsfenster 10, durch welches die Sendelichtstrahlen 3 in den Überwachungsbereich geführt sind. Bei freiem Überwachungsbereich treffen die Sendelichtstrahlen 3 auf einen den Überwachungsbereich begrenzenden Reflektor 11 und werden von dort als Empfangslichtstrahlen 5 zum Empfänger 6 zurückreflektiert. Bei einem Objekteingriff im Überwachungsbereich erreichen die Sendelichtstrahlen 3 nicht mehr den Reflektor 11, sondern werden am Objekt reflektiert und zurück zum Empfänger 6 geführt. Die durch den Objekteingriff bedingte Änderung der Empfangssignale wird in der Auswerteeinheit 7 zur Generierung einer Objektmeldung ausgewertet. Im vorliegenden Fall wird in der Auswerteeinheit 7 ein binäres Objektfeststellungssignal generiert, dessen Schaltzustände angeben, ob sich ein Objekt im Überwachungsbereich befindet oder nicht.

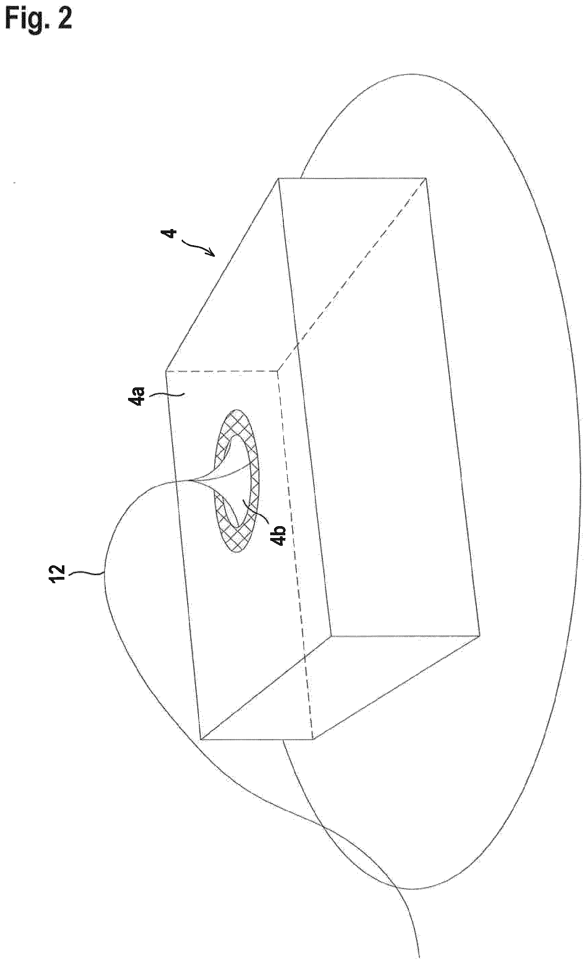

Figur 2 zeigt eine detailliertere Darstellung des Senders 4 für den optischen Sensor 1 gemäß Figur 1. Der Sender 4 ist als Sendediode ausgebildet, die im Wesentlichen aus einem Chip besteht, dessen Frontseite eine lichtemittierende Fläche 4a bildet. Zur elektrischen Kontaktierung der Sendediode befindet sich im Zentrum ein Bondpad 4b zum Anschluss eines Bonddrahts 12. Durch die Anbringung des Bondpads 4b auf dem Chip ist die lichtemittierende Fläche 4a im Zentrum ausgespart. Dementsprechend emittiert die Sendediode nur in dem an das Bondpad 4b anschließenden Bereich der lichtemittierenden Fläche 4a Sendelichtstrahlen 3.

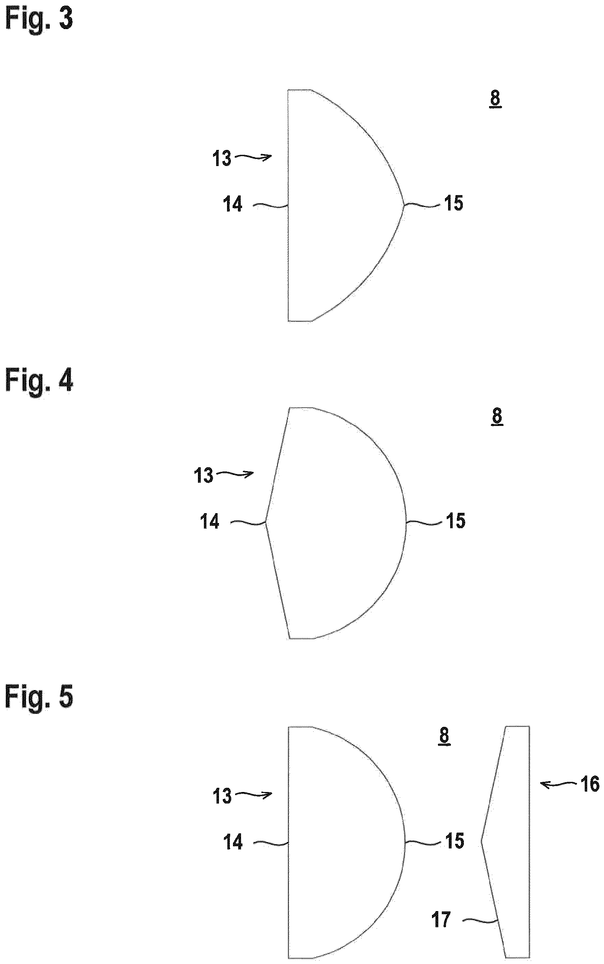

Die Figuren 3 bis 5 zeigen unterschiedliche Ausführungsformen der erfindungsgemäßen Sendeoptik 8.

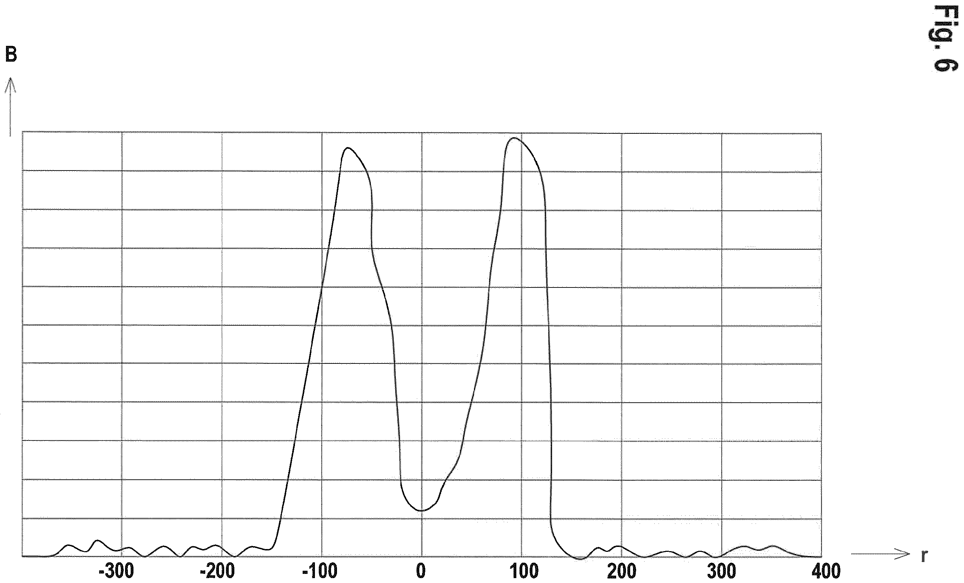

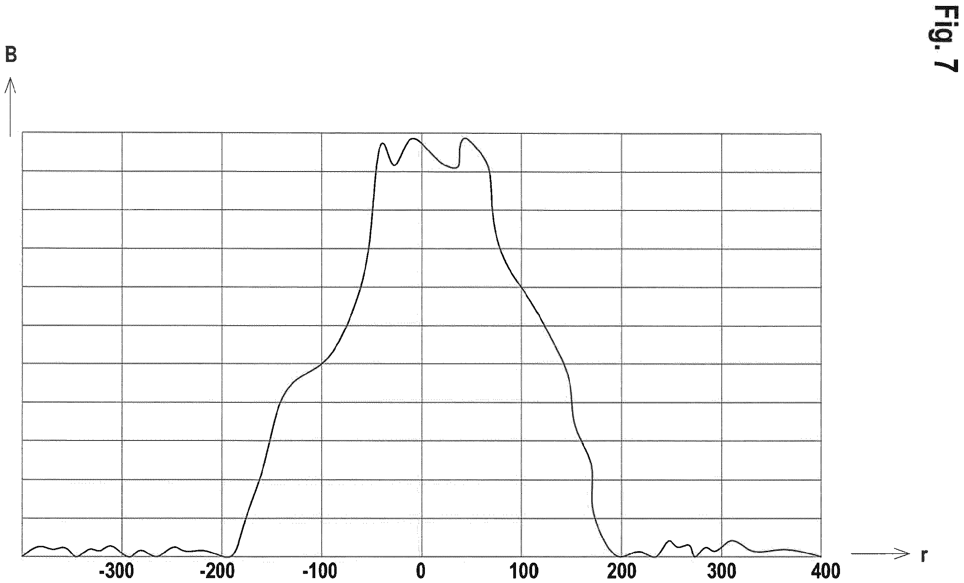

Die Figuren 6 und 7 veranschaulichen den Effekt, der mit der erfindungsgemäßen Sendeoptik 8 erzielt wird.

Dabei ist in Figur 6 in relativen Einheiten die Ortsabhängigkeit der Bestrahlungsstärke der Sendelichtstrahlen 3, die von einer abbildenden Optik am Ort der Abbildung erzeugt wird, als Querschnittskurve dargestellt. Die Bestrahlungsstärke abhängig vom Radius r ist symmetrisch zum Zentrum bei r = 0. Aufgrund des Bonddrahts 12 im Zentrum der lichtemittierenden Fläche der den Sender 4 bildenden Sendediode weist die Bestrahlungsstärke im Bereich des Zentrums bei r = 0 ein Minimum auf, sodass eine inhomogene Bestrahlungsstärke abhängig vom Radius r erhalten wird.

Durch die erfindungsgemäße Sendeoptik 8 wird diese Inhomogenität nahezu vollständig beseitigt, wie Figur 7 zeigt. Im Bereich des Zentrums liegt die Bestrahlungsstärke nahezu konstant bei einem Maximalwert. Die Breite des Lichtflecks der Sendelichtstrahlen 3 ist nicht nennenswert verbreitert.

Bei der Ausführungsform der Figur 3 besteht die Sendeoptik 8 aus einer Linse 13. Die Linse 13 besteht aus einem für die Sendelichtstrahlen 3 transparenten Grundkörper, der beispielsweise aus einem transparenten Kunststoff oder Glas besteht.

Diese Linse 13 weist eine plankonvexe Grundform auf, die eine ebene Lichteintrittsfläche 14 aufweist. Die Lichtaustrittsfläche 15 ist erfindungsgemäß derart ausgebildet, dass diese eine sphärische oder asphärische Krümmung aufweist, wie sie für Linsen üblich ist, und dieser Krümmung zusätzlich eine rotationssymmetrische kontinuierliche Keilform ausgeprägt ist.

Mit der keilförmigen Grenzfläche wird die Homogenisierung der Strahlverteilung der Sendelichtstrahlen 3, wie in Figur 7 dargestellt, erzielt.

Bei der Ausführungsform gemäß Figur 4 besteht die Sendeoptik 8 wiederum nur aus einer Linse 13, welche wieder eine plankonvexe Grundform aufweist. In diesem Fall weist die Lichtaustrittsfläche 15 eine sphärische oder asphärische Krümmung auf, wie sie bei plankonvexen Linsen üblich ist.

Bei der Ausführungsform gemäß Figur 4 ist die Lichteintrittsfläche 14 in Form einer kontinuierlich gekrümmten, rotationssymmetrischen Grenzfläche in einer Keilform ausgebildet.

Somit ist die die Lichteintrittsfläche 14 bildende Grenzfläche kegelförmig ausgebildet.

Mit der keilförmigen Grenzfläche wird die homogene Strahlverteilung der Sendelichtstrahlen 3 gemäß Figur 7 erhalten.

Bei der Ausführungsform gemäß Figur 5 besteht die Sendeoptik 8 aus einer plankonvexen Linse 13 und einer Abdeckscheibe 16. Die Abdeckscheibe 16 kann Bestandteil des Austrittsfensters 10 sein.

In diesem Fall weist die Abdeckscheibe 16 eine Lichteintrittsfläche 17 in Form kontinuierlich gekrümmter, rotationssymmetrischen Grenzfläche in einer Keilform auf. Diese Grenzfläche ist kegelförmig und sorgt für die homogene Verteilung der Sendelichtstrahlen 3 gemäß Figur 7.

### Bezugszeichenliste

- (1): Optischer Sensor
- (2): Gehäuse
- (3): Sendelichtstrahl
- (4): Sender
- (4a): lichtemittierende Fläche
- (4b): Bondpad
- (5): Empfangslichtstrahl
- (6): Empfänger
- (7): Auswerteeinheit
- (8): Sendeoptik
- (9): Empfangsoptik
- (10): Austrittsfenster
- (11): Reflektor
- (12): Bonddraht
- (13): Linse
- (14): Lichteintrittsfläche
- (15): Lichtaustrittsfläche
- (16): Abdeckscheibe
- (17): Lichteintrittsfläche

## Patentansprüche

1. Optischer Sensor (1) zur Erfassung von Objekten in einem Überwachungsbereich, mit einem Sendelichtstrahlen (3) emittierenden Sender (4), einer dem Sender (4) nachgeordneten Sendeoptik (8) zur Strahlformung der Sendelichtstrahlen (3), einem Empfangslichtstrahlen (5) empfangenden Empfänger (6) und einer Auswerteeinheit (7) zur Generierung eines Objektfeststellungssignals in Abhängigkeit der Empfangssignale am Ausgang des Empfängers (6), **dadurch gekennzeichnet, dass** wenigstens eine Grenzfläche der Sendeoptik (8) eine kontinuierliche Keilform, ohne abrupte Übergänge wie Kanten oder Absätze, aufweist.

2. Optischer Sensor (1) nach Anspruch 1, **dadurch gekennzeichnet, dass** die keilförmige Grenzfläche rotationssymmetrisch ausgebildet ist.

3. Optischer Sensor (1) nach einem der Ansprüche 1 oder 2, **dadurch gekennzeichnet, dass** die keilförmige Grenzfläche kegelförmig ausgebildet ist.

4. Optischer Sensor (1) nach einem der Ansprüche 1 bis 3, **dadurch gekennzeichnet, dass** die kontinuierliche Keilform einer gekrümmten Grenzfläche aufgeprägt ist.

5. Optischer Sensor (1) nach Anspruch 4, **dadurch gekennzeichnet, dass** die gekrümmte Grenzfläche asphärisch gekrümmt ist.

6. Optischer Sensor (1) nach einem der Ansprüche 1 bis 5, **dadurch gekennzeichnet, dass** die Sendeoptik (8) nur ein dem Sender (4) zugeordnetes Optikelement aufweist, wobei dessen Lichteintrittsfläche (14) oder Lichtaustrittsfläche (15) die Grenzfläche ausbildet.

7. Optischer Sensor (1) nach Anspruch 6, **dadurch gekennzeichnet, dass** das Optikelement eine Linse (13) ist.

8. Optischer Sensor (1) nach Anspruch 7, **dadurch gekennzeichnet, dass** die Linse (13) eine plankonvexe Grundform aufweist, die durch die keilförmige Grenzfläche modifiziert ist.

9. Optischer Sensor (1) nach einem der Ansprüche 1 bis 5, **dadurch gekennzeichnet, dass** die Sendeoptik (8) ein dem Sender (4) zugeordnetes Optikelement und eine dem Optikelement vorgeordnete Abdeckscheibe (16) aufweist, wobei die Abdeckscheibe (16) die Grenzfläche mit der Keilform aufweist.

10. Optischer Sensor (1) nach Anspruch 9, **dadurch gekennzeichnet, dass** die Lichteintrittsfläche (17) oder Lichtaustrittsfläche der Abdeckscheibe (16) die Grenzfläche ausbildet.

11. Optischer Sensor (1) nach einem der Ansprüche 9 oder 10, **dadurch gekennzeichnet, dass** das der Abdeckscheibe (16) zugeordnete Optikelement eine Sammellinse (13) ist.

12. Optischer Sensor (1) nach einem der Ansprüche 1 bis 11, **dadurch gekennzeichnet, dass** dieser eine Reflexionslichtschranke ist.

## Claims

1. An optical sensor (1) for detecting objects in a monitored area, having a transmitter (4) emitting transmitted light beams (3), a transmitting optical system (8) arranged downstream of the transmitter (4) for beam shaping of the transmitted light beams (3), a receiver (6) receiving received light beams (5) and an evaluation unit (7) for generating an object detection signal in dependence on the received signals at the output of the receiver (6), **characterised in that** at least one boundary surface of the transmitter optics (8) has a continuous wedge shape without abrupt transitions such as edges or shoulders.

2. An optical sensor (1) according to claim 1, **characterised in that** the wedge-shaped boundary surface is rotationally symmetrical.

3. An optical sensor (1) according to one of claims 1 or 2, **characterised in that** the wedge-shaped interface is conical.

4. An optical sensor (1) according to one of the claims 1 to 3, **characterised in that** the continuous wedge shape is imprinted on a curved interface.

5. An optical sensor (1) according to claim 4, **characterised in that** the curved interface is aspherically curved.

6. An optical sensor (1) according to one of the claims 1 to 5, **characterised in that** the transmitting optics (8) has only one optics element associated with the transmitter (4), the light entry surface (14) or light exit surface (15) of which forms the interface.

7. An optical sensor (1) according to claim 6, **characterised in that** the optical element is a lens (13).

8. An optical sensor (1) according to claim 7, **characterised in that** the lens (13) has a plano-convex basic shape which is modified by the wedge-shaped interface.

9. An optical sensor (1) according to any one of claims 1 to 5, **characterised in that** the transmitting optics (8) has an optical element associated with the transmitter (4) and a cover disc (16) arranged in front of the optical element, the cover disc (16) having the interface with the wedge shape.

10. An optical sensor (1) according to claim 9, **characterised in that** the light entry surface (17) or light exit surface of the cover disc (16) forms the interface.

11. An optical sensor (1) according to one of claims 9 or 10, **characterised in that** the optical element associated with the cover pane (16) is a converging lens (13).

12. An optical sensor (1) according to one of claims 1 to 11, **characterised in that** it is a reflection light barrier.

## Revendications

1. Capteur optique (1) pour la détection d'objets dans une zone surveillée, comportant un émetteur (4) émettant des faisceaux lumineux transmis (3), un système optique de transmission (8) disposé en aval de l'émetteur (4) pour la mise en forme des faisceaux lumineux transmis (3), un récepteur (6) recevant les faisceaux lumineux reçus (5) et une unité d'évaluation (7) pour générer un signal de détection d'objet en fonction des signaux reçus à la sortie du récepteur (6), **caractérisé par le fait qu'**au moins une surface limite de l'optique d'émission (8) a une forme de coin continu sans transitions abruptes telles que des arêtes ou des épaulements.

2. Capteur optique (1) selon la revendication 1, **caractérisé en ce que** la surface limite en forme de coin est symétrique de rotation.

3. Capteur optique (1) selon l'une des revendications 1 ou 2, **caractérisé par le fait que** l'interface en forme de coin est conique.

4. Capteur optique (1) selon l'une des revendications 1 à 3, **caractérisé en ce que** la forme continue du coin est imprimée sur une interface incurvée.

5. Capteur optique (1) selon la revendication 4, **caractérisé en ce que** l'interface courbe est courbe asphérique.

6. Capteur optique (1) selon l'une des revendications 1 à 5, **caractérisé en ce que** l'optique de transmission (8) ne comporte qu'un seul élément optique associé à l'émetteur (4), dont la surface d'entrée (14) ou de sortie (15) de la lumière forme l'interface.

7. Capteur optique (1) selon la revendication 6, **caractérisé en ce que** l'élément optique est une lentille (13).

8. Capteur optique (1) selon la revendication 7, **caractérisé en ce que** la lentille (13) a une forme de base plan-convexe qui est modifiée par l'interface en forme de coin.

9. Capteur optique (1) selon l'une quelconque des revendications 1 à 5, **caractérisé en ce que** l'optique de transmission (8) comporte un élément optique associé à l'émetteur (4) et un disque de recouvrement (16) disposé devant l'élément optique, le disque de recouvrement (16) présentant l'interface en forme de coin.

10. Capteur optique (1) selon la revendication 9, **caractérisé en ce que** la surface d'entrée de la lumière (17) ou la surface de sortie de la lumière du disque de recouvrement (16) forme l'interface.

11. Capteur optique (1) selon l'une des revendications 9 ou 10, **caractérisé en ce que** l'élément optique associé à la vitre de recouvrement (16) est une lentille convergente (13).

12. Capteur optique (1) selon l'une des revendications 1 à 11, **caractérisé en ce qu'**il s'agit d'une barrière optique à réflexion.
